# EUROPÄISCHE PATENTSCHRIFT

(11) **EP 2 318 184 B1**
(45) Veröffentlichungstag und Bekanntmachung des Hinweises auf die Patenterteilung: **20.09.2017**
(21) Anmeldenummer: 09780573.3
(22) Anmeldetag: 14.07.2009
(51) Int. Cl.: F16H 3/02, B25B 21/00, B25F 5/00, B25B 23/14

(54) **SCHALTBARES GETRIEBE IN EINER HANDWERKZEUGMASCHINE**
SWITCHABLE GEAR IN A HAND-HELD POWER TOOL
TRANSMISSION DÉBRAYABLE POUR UNE MACHINE-OUTIL MANUELLE

(30) Priorität: 27.08.2008 DE 102008041599
(43) Veröffentlichungstag der Anmeldung: 11.05.2011
(73) Patentinhaber: Robert Bosch GmbH, 70442 Stuttgart (DE)
(72) Erfinder: HECHT, Joachim, 71106 Magstadt (DE); ROEHM, Heiko, 70176 Stuttgart (DE); KRAUS, Martin, 70794 Filderstadt (DE); SAUR, Dietmar, 72810 Gomaringen (DE)
(86) Internationale Anmeldenummer: PCT/EP2009/058998
(87) Internationale Veröffentlichungsnummer: WO 2010/023025

(56) Entgegenhaltungen:
- EP-A- 0 787 931
- EP-A- 1 946 895
- DE-A1-102004 058 809

## Beschreibung

Die Erfindung bezieht sich auf ein schaltbares Getriebe in einer Handwerkzeugmaschine nach dem Oberbegriff des Anspruches 1.

### Stand der Technik

In der DE 10 2004 058 809 A1 wird eine als Akku-Schrauber ausgebildete Handwerkzeugmaschine beschrieben, die als Antrieb einen Elektromotor aufweist, welcher über ein mehrstufiges Planetengetriebe eine Werkzeugaufnahme antreibt, die zur Aufnahme eines Werkzeuges ausgebildet ist. Die Handwerkzeugmaschine ist mit einer Drehmomentbegrenzungseinheit ausgestattet, welche die Funktion einer Drehmomentkupplung einnimmt, um den Kraftfluss zwischen dem Motorabtrieb und der Werkzeugaufnahme zu unterbrechen, falls das übertragene Drehmoment den eingestellten Wert übersteigt. Die Drehmomentbegrenzungseinheit umfasst Federelemente, die ein Hohlrad des Planetengetriebes kraftbeaufschlagen und diesen im normalen Betrieb, bei dem ein Drehmoment auf die Werkzeugmitnahme unterhalb eines eingestellten maximalen Drehmoments übertragen wird, gehäusefest sichern. Erreicht das Drehmoment auf die Werkzeugmitnahme das eingestellte maximale Drehmoment, so wird die drehfeste Verbindung zwischen Hohlrad und Gehäuse unterbrochen und damit auch die Übertragung des Drehmoments auf die Werkzeugmitnahme.

Planetengetriebe wie das in der DE 10 2004 058 809 A1 gezeigte können üblicherweise zwischen zwei Gangstufen mit langsamer Umdrehungsgeschwindigkeit und hohem Drehmoment bzw. höherer Umdrehungsgeschwindigkeit und geringerem Drehmoment geschaltet werden. Bei der Gangwahl verstellt ein Schaltschieber manuell ein Schalthohlrad zwischen einer Rastposition mit einem Gehäuserastbauteil und einer Außerrastposition, wobei die Rastposition und die Außerrastposition jeweils einer Gangstufe entsprechen.

Aus EP 1 946 895 A1 ist ein schaltbares Getriebe mit einer Schalthülse bekannt, welche eine Außenverzahnung aufweist. Zur gehäusefesten Verrastung der Schalthülse wird die Außenverzahnung in Eingriff mit einer Verzahnung an der inneren Umfangswand des Getriebegehäuses gebracht.

EP 787 931 A1 offenbart ein automatisches Schaltgetriebe für eine Handwerkzeugmaschine. Das Schaltgetriebe umfasst ein Hohlrad mit einer konischen Fläche und ein ringförmiges Element, wobei die konische Fläche mit dem ringförmigen Element zusammenwirkt, um das Hohlrad axial zu verschieben.

### Offenbarung der Erfindung

Von diesem Stand der Technik ausgehend liegt der Erfindung die Aufgabe zu Grunde, ein kompakt bauendes, schaltbares Getriebe in einer Handwerkzeugmaschine anzugeben.

Diese Aufgabe wird erfindungsgemäß mit den Merkmalen des Anspruches 1 gelöst. Die Unteransprüche geben zweckmäßige Weiterbildungen an.

Das schaltbare Getriebe in einer Handwerkzeugmaschine weist mindestens zwei Gangstufen auf, zwischen denen geschaltet werden kann, wobei jeder Gangstufe ein bestimmtes Übersetzungsverhältnis zwischen dem elektrischen Antriebsmotor und einer Spindel zur Werkzeugaufnahme sowie ein bestimmtes Drehmoment zugeordnet ist. In einer Gangstufe ist ein Schaltglied, über das die Gangstufen eingelegt werden, mit einem gehäusefest gehaltenen Sicherungselement in einer Rastposition gehalten, so dass das Schaltglied über das Sicherungselement auch gehäusefest gesichert ist. In der zweiten Gangstufe steht dagegen das Schaltglied in Außerrastposition mit dem Sicherungselement und kann daher gegenüber dem Gehäuse eine Drehbewegung ausführen.

Zur Drehmomentbegrenzung ist im Übertragungsweg zwischen dem Getriebe und der Spindel zur Aufnahme des Werkzeugs mindestens ein Federelement vorgesehen, das ein im Gehäuse abgestütztes Getrieberad des Getriebes axial belastet. In Abhängigkeit von der Belastung wird ein mehr oder weniger hohes Drehmoment auf die Spindel übertragen.

Das Getrieberad ist auf der dem Schaltglied gegenüberliegenden Seite axial abgestützt. Dem Sicherungselement kommen somit zwei Funktionen zu: Zum einen dient das Sicherungselement dazu, das Schaltglied zum Schalten zwischen den Gangstufen des Getriebes in eine Rastposition zu bringen, in der das Schaltglied gehäusefest arretiert ist. Zum andern hat das Sicherungselement eine Abstützfunktion für das Getrieberad, welches sich durch die Kraft des Federelementes belastet axial an dem Sicherungselement abstützt. Auf Grund dieser Doppelfunktion kann zumindest ein Bauteil, welches in Ausführungen aus dem Stand der Technik zusätzlich vorhanden ist, entfallen, wodurch neben der Reduzierung der Anzahl an benötigten Bauteilen auch eine kompaktere Bauform, insbesondere in Achsrichtung des Getriebestrangs erreicht wird. Neben der Reduzierung der axialen Länge wird zudem eine Vereinfachung des Gehäuses der Handwerkzeugmaschine erreicht, da lediglich eine Aufnahmeeinrichtung im Gehäuse zur Arretierung des Sicherungselementes vorgesehen sein muss. Erfindungsgemäß ist das Sicherungselement als Sicherungsring ausgebildet, der an der Innenseite des Gehäuses anliegt, wobei im Innenraum des Sicherungsringes weitere Getriebebauteile ohne gegenseitige Behinderung oder Funktionseinschränkung angeordnet sein können. Der Sicherungsring weist bevorzugt auf der Innenseite Formschlusselemente auf, die in der Rastposition in Formschluss mit dem Schaltglied stehen. Die Formschlusselemente ragen radial nach innen und erlauben ein axiales Einschieben komplementär ausgebildeter Formschlusselemente an dem Schaltglied, so dass dieses durch Axialverschiebung zwischen der Rast- bzw. Formschlussposition und der Außerrastposition zu verstellen ist.

Des Weiteren weist der Sicherungsring zweckmäßigerweise auf der Außenseite radial überstehende Rastelemente auf, mit denen der Sicherungsring in eine axiale Raststellung mit dem Gehäuse der Handwerkzeugmaschine bzw. dem Gehäuse des Getriebes zu bringen ist. Die Rastelemente ragen zweckmäßigerweise in entsprechend geformte Rastausnehmungen ein, die in die Innenwand des Gehäuses eingebracht sind.

Bei dem Getriebe handelt es sich vorteilhafterweise um ein Planetengetriebe, wobei das Schaltglied bevorzugt als Schalthohlrad ausgeführt ist, das in der Außerrastposition mit einem Planetenträger des Planetengetriebes gekoppelt umläuft und in der Rastposition vom Planetenträger entkoppelt und durch den Formschluss mit dem Sicherungsring gehäusefest arretiert ist. Das Getrieberad, über das abtriebsseitig das Drehmoment auf die Spindel übertragen wird und das von dem mindestens einen Federelement axial kraftbeaufschlagt ist, ist vorzugsweise als Getriebehohlrad ausgeführt. Das Getriebehohlrad stützt sich axial an der dem Schalthohlrad abgewandten Stirnseite des Sicherungsringes ab.

Weitere Vorteile und zweckmäßige Ausführungen sind den weiteren Ansprüchen, der Figurenbeschreibung und den Zeichnungen zu entnehmen. Es zeigen:
- Fig. 1: eine stark schematisierte Darstellung einer Handwerkzeugmaschine mit dem aus Antriebsmotor, Getriebe und Spindel zur Werkzeugaufnahme bestehenden Antriebsstrang,
- Fig. 2: einen Schnitt durch die Handwerkzeugmaschine im Bereich des Getriebes und der vom Getriebe angetriebenen Spindel,
- Fig. 3: eine weitere Schnittdarstellung aus dem Bereich des Getriebes, mit einem Sicherungsring, an dem sich ein Getriebehohlrad axial abstützt und der zugleich in einer Raststellung mit einem Schalthohlrad steht,
- Fig. 4: eine perspektivische Ansicht auf das Getriebe im Bereich des Sicherungsringes,
- Fig. 5: der Sicherungsring in Einzeldarstellung.

In den Figuren sind gleiche Bauteile mit gleichen Bezugszeichen versehen.

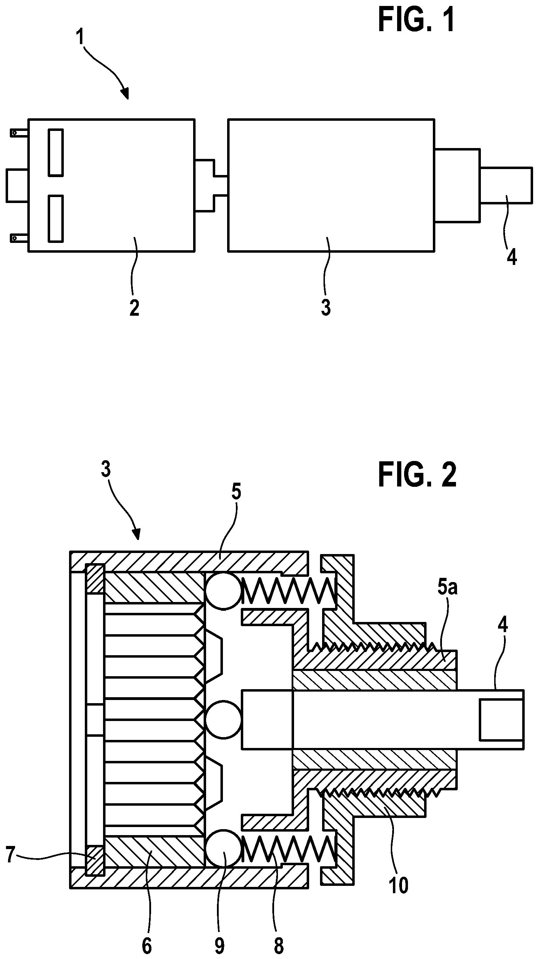

In Fig. 1 ist in stark schematisierter Weise eine elektrische Handwerkzeugmaschine 1 dargestellt, beispielsweise ein Akku-Bohrer bzw. Akku-Schrauber, bestehend aus einem elektrischen Antriebsmotor 2, einem Getriebe 3 sowie einer vom Getriebe angetriebenen Spindel 4, die zur Aufnahme eines Werkzeuges dient. Über das Getriebe 3 wird die Drehzahl des elektrischen Antriebsmotors 2 in eine geringere Drehzahl der Spindel 4 umgesetzt. Bei dem Getriebe 3 handelt es sich vorzugsweise um ein Planetengetriebe, das zwischen zwei verschiedenen Gangstufen mit unterschiedlichem Übersetzungsverhältnis und damit einhergehend unterschiedlicher Drehmomentübertragung schaltbar ist.

In Fig. 2 ist ein Teil des Getriebes 3 im Übergang zur Spindel 4 im Schnitt dargestellt. In einem Gehäuse 5 des Getriebes, das zugleich Bestandteil des Gehäuses der Handwerkzeugmaschine ist, ist ein Getriebehohlrad 6 axial in Richtung des elektrischen Antriebsmotors von einem Sicherungsring 7 abgestützt. Auf der dem Sicherungsring 7 gegenüberliegenden Seite ist das axial im Gehäuse 5 verschiebbar gelagerte Getriebehohlrad 6 von einem Federelement 8 und Sperrkörpern 9 axial in Richtung auf den Sicherungsring 7 kraftbeaufschlagt. Der Fußpunkt des Federelementes 8 ist spindelseitig axial verstellbar an einem Stellring 10 gehalten, der auf einem Gehäuseabschnitt 5a aufsitzt und dessen axiale Position durch Verdrehen gegenüber dem Gehäuseabschnitt 5a zu verstellen ist. Hierzu weist der Stellring 10 zweckmäßigerweise ein Innengewinde auf, das mit einem Außengewinde auf dem Gehäuseabschnitt 5a kämmt. Der Stellring 10, das Federelement 8 einschließlich Sperrkörper 9 und das Getriebehohlrad 6 bilden eine Drehmomentkupplung zur Begrenzung des maximal übertragbaren Drehmoments. Über die axiale Verstellung des Stellrings 10 wird der Fußpunkt des Federelementes 8 und damit die Vorspannung des Federelementes 8 verstellt, wodurch Einfluss auf das übertragbare Drehmoment genommen werden kann.

Es kann zweckmäßig sein, über den Umfang verteilt mehrere Federelemente mit jeweils zugeordnetem Sperrkörper 9 vorzusehen. Die Sperrkörper 9 liegen hierbei unmittelbar an einer axialen Stirnfläche des Getriebehohlrades 6 an.

Der Sicherungsring 7 ist formschlüssig im Gehäuse 5 aufgenommen. Hierzu weist das Gehäuse 5 an der Innenseite Formschlussausnehmungen auf, in die radial nach außen überstehende Rastelemente des Sicherungsringes 7 eingreifen, wodurch der Sicherungsring 7 in beide Achsrichtungen fest mit dem Gehäuse 5 verbunden ist.

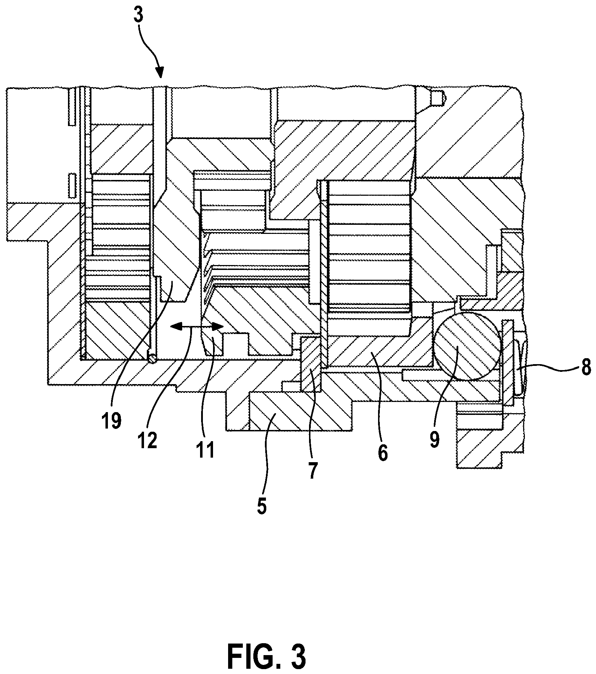

Fig. 3 zeigt einen Ausschnitt aus dem Getriebe 3. An einer Stirnseite des Sicherungsringes 7 liegt spindelseitig das Getriebehohlrad 6 an, das sich am Sicherungsring 7 axial abstützt. Das Getriebehohlrad 6 wird über das Federelement 8 und von dem Sperrkörper 9 axial auf den Sicherungsring 7 kraftbeaufschlagt.

Auf der gegenüberliegenden, dem elektrischen Antriebsmotor zugewandten Seite befindet sich ein Schalthohlrad 11, das, wie gemäß Doppelpfeil 12 angedeutet, axial im Gehäuse 5 verschiebbar gelagert ist und zwischen der in Fig. 3 gezeigten Rastposition mit dem Sicherungsring 7 und einer axial vom Sicherungsring 7 entfernten Außerrastposition verstellbar ist. Die Rastposition des Schalthohlrads 11 mit dem Sicherungsring 7 sowie die Außerrastposition, in welcher der Formschluss zum Gehäuse aufgehoben, jedoch mit dem Planetenträger 19 hergestellt ist, stellen jeweils Gangstufen des Getriebes zur Realisierung eines unterschiedlichen Übersetzungs- und Drehmomentverhältnisses dar. In der gezeigten Rastposition ist das Schalthohlrad 11 so weit in Richtung auf den Sicherungsring 7 axial verschoben, dass die spindelseitige Stirnfläche des Sicherungsringes 7 mit der Stirnfläche des Schalthohlrades 11 in einer gemeinsamen Ebene liegt.

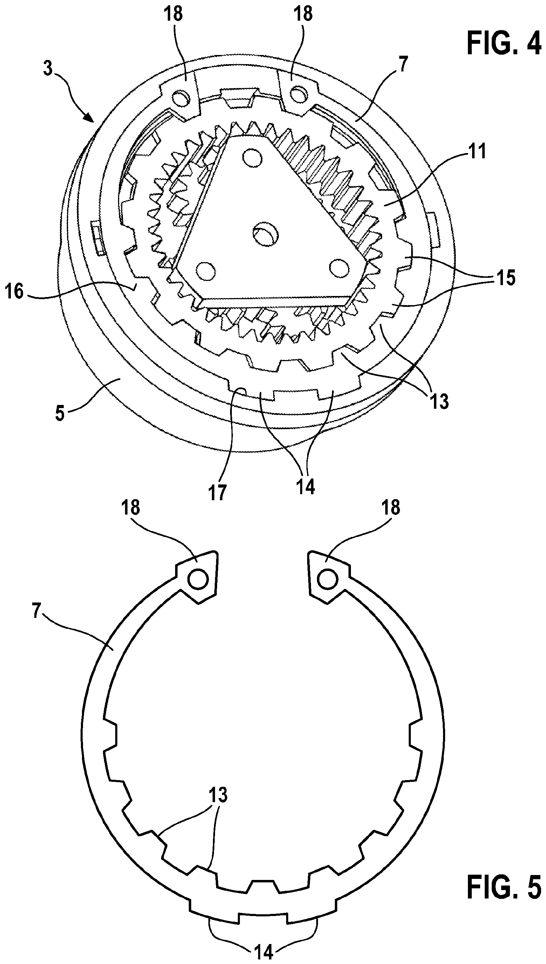

In Fig. 4 ist eine perspektivische Ansicht des Getriebes 3 im Bereich des Sicherungsringes 7 dargestellt. Das Getriebehohlrad 6 weist auf seiner Außenseite Formschlusselemente 15 auf, die mit korrespondierenden Formschlusselementen 13 am Sicherungsring 7 in Rastposition stehen. Die ineinandergreifenden Formschlusselemente 13 und 15 bilden hierbei eine Verzahnung, die sich in Umfangsrichtung erstreckt. Die Verzahnung erlaubt ein axiales Einführen des Schalthohlrades 11 in die zahnförmigen Formschlusselemente 13 des Sicherungsringes 7.

An der in Fig. 4 nach oben weisenden axialen Stirnfläche 16 des Sicherungsringes 7 stützt sich das Getriebehohlrad 6 (Fig. 2, Fig. 3) ab.

An der radialen Außenseite des Sicherungsringes 7 sind radial erhabene Rastelemente 14 angeordnet, die in korrespondierende Ausnehmungen 17 auf der Innenseite des Gehäuses 5 verrastend einragen, wodurch der Sicherungsring 7 gegenüber dem Gehäuse 5 in Umfangs- bzw. Drehrichtung formschlüssig am Gehäuse gehalten ist.

Wie der Einzeldarstellung des Sicherungsringes 7 nach Fig. 5 zu entnehmen, ist der Sicherungsring nicht vollständig geschlossen ausgeführt, sondern weist ein offenes Winkelsegment von etwa 25° auf. An den freien Stirnseiten des Sicherungsringes befinden sich Montageösen 18, die beim Zusammenbau als Montagehilfe dienen.

Die Formschlusselemente 13 auf der Innenseite des Sicherungsringes 7, die sich radial nach innen erheben, erstrecken sich etwa über einen Winkelbereich von 180°. Der Sicherungsring 7, der vorzugsweise als Metallring, beispielsweise aus Federstahl besteht, weist einen sich in Richtung der beiden Halteösen 18 verjüngenden Querschnitt auf. Dementsprechend besitzt der Querschnitt 7 seinen größten Querschnitt auf der dem Winkelsegment zwischen den Halteösen 18 diametral gegenüberliegenden Seite, an der auch die an der Außenseite des Sicherungsringes sich radial nach außen erhebenden Rastelemente 14 angeordnet sind. Insgesamt sind nur zwei derartige Rastelemente 14 vorgesehen, wohingegen auf der Innenseite eine Mehrzahl von Formschlusselementen 13 angeordnet sind.

## Patentansprüche

1. Schaltbares Getriebe in einer Handwerkzeugmaschine, das mindestens zwei Gangstufen aufweist, die über ein verstellbares Schaltglied (11) einzulegen sind, wobei in einer ersten Gangstufe das Schaltglied (11) mit einem gehäusefest gehaltenen Sicherungselement (7) in einer Rastposition und in einer zweiten Gangstufe in einer Außerrastposition mit dem Sicherungselement (7) steht, und mit einer Spindel (4) zur Aufnahme eines Werkzeugs, die von einem axial federbelasteten, im Gehäuse (5) abgestützten Getrieberad (6) antreibbar ist, wobei das Getrieberad (6) auf der dem Schaltglied (11) gegenüberliegenden Seite an dem Sicherungselement (7) axial abgestützt ist, **dadurch gekennzeichnet, dass** das Sicherungselement als Sicherungsring (7) ausgebildet ist.

2. Getriebe nach Anspruch 1, **dadurch gekennzeichnet, dass** der Sicherungsring (7) auf der Innenseite Formschlusselemente (13) aufweist, die in der Rastposition in Formschluss mit dem Schaltglied (11) stehen.

3. Getriebe nach Anspruch 1 oder 2, **dadurch gekennzeichnet, dass** der Sicherungsring (7) auf der Außenseite radial überstehende Rastelemente (14) aufweist, die zur Verrastung des Sicherungsrings (7) im Gehäuse (5) dienen.

4. Getriebe nach einem der Ansprüche 1 bis 3, **dadurch gekennzeichnet, dass** in der Rastposition das Schaltglied (11) so weit axial in Richtung auf den Sicherungsring (7) verschoben ist, dass die spindelseitige Stirnfläche des Sicherungsrings (7) mit der Stirnfläche des Schaltglieds (11) in einer gemeinsamen Ebene liegt.

5. Getriebe nach einem der Ansprüche 1 bis 4, **dadurch gekennzeichnet, dass** der Sicherungsring (7) ein offenes Winkelsegment von etwa 25° aufweist.

6. Getriebe nach Anspruch 5, **dadurch gekennzeichnet, dass** an den freien Stirnseiten des Sicherungsrings (7) Halteösen (18) angeordnet sind.

7. Getriebe nach Anspruch 6, **dadurch gekennzeichnet, dass** der Sicherungsring (7) einen sich in Richtung der beiden Halteösen (18) verjüngenden Querschnitt aufweist.

8. Getriebe nach einem der Ansprüche 1 bis 7, **dadurch gekennzeichnet, dass** das Schaltglied als Schalthohlrad (11) ausgeführt ist.

9. Getriebe nach einem der Ansprüche 1 bis 8, **dadurch gekennzeichnet, dass** das Getrieberad als Getriebehohlrad (6) ausgeführt ist.

10. Getriebe nach einem der Ansprüche 1 bis 9, **dadurch gekennzeichnet, dass** das Federelement (8) mindestens einen Sperrkörper (9) gegen eine Stirnseite des Getrieberads (6) drückt.

11. Getriebe nach einem der Ansprüche 1 bis 10, **dadurch gekennzeichnet, dass** der Fußpunkt des Federelements (8) auf der dem Getrieberad (6) abgewandten Seite über einen Stellring (10) einstellbar ist.

12. Getriebe nach Anspruch 11, **dadurch gekennzeichnet, dass** der Stellring (10) an der Spindel (4) verstellbar gehalten ist.

13. Getriebe nach einem der Ansprüche 1 bis 12, **dadurch gekennzeichnet, dass** das Getriebe (3) als Planetengetriebe ausgeführt ist.

14. Handwerkzeugmaschine mit einem Getriebe nach einem der Ansprüche 1 bis 13.

## Claims

1. Shiftable transmission in a hand-held power tool, said transmission having at least two gear stages which are to be engaged via an adjustable shifting member (11), wherein, a first gear stage, the shifting member (11) is in a latching position with a securing element (7), which is held mounted on the housing, and, in a second gear stage, is in a non-latching position with the securing element (7), and having a spindle (4) for receiving a tool, the spindle being drivable by an axially spring-loaded gearwheel (6) supported in the housing (5), wherein, on the side opposite the shifting member (11), the gearwheel (6) is supported axially on the securing element (7), **characterized in that** the securing element is designed as a securing ring (7).

2. Transmission according to Claim 1, **characterized in that** the inner side of the securing ring (7) has form-fitting elements (13) which are in form-fitting connection with the shifting member (11) in the latching position.

3. Transmission according to Claim 1 or 2, **characterized in that** the outer side of the securing ring (7) has radially protruding latching elements (14) which serve for latching the securing ring (7) in the housing (5).

4. Transmission according to one of Claims 1 to 3, **characterized in that**, in the latching position, the shifting member (11) is displaced so far axially in the direction of the securing ring (7) that the spindle-side end surface of the securing ring (7) lies in a common plane with the end surface of the shifting member (11).

5. Transmission according to one of Claims 1 to 4, **characterized in that** the securing ring (7) has an open angular segment of approximately 25°.

6. Transmission according to Claim 5, **characterized in that** holding eyes (18) are arranged on the free end sides of the securing ring (7).

7. Transmission according to Claim 6, **characterized in that** the securing ring (7) has a cross section tapering in the direction of the two holding eyes (18).

8. Transmission according to one of Claims 1 to 7, **characterized in that** the shifting member is designed as a shifting ring gear (11).

9. Transmission according to one of Claims 1 to 8, **characterized in that** the gearwheel is designed as a transmission ring gear (6).

10. Transmission according to one of Claims 1 to 9, **characterized in that** the spring element (8) presses at least one blocking body (9) against an end side of the gearwheel (6).

11. Transmission according to one of Claims 1 to 10, **characterized in that** the foot of the spring element (8) is adjustable via an adjusting ring (10) on the side facing away from the gearwheel (6).

12. Transmission according to Claim 11, **characterized in that** the adjustment ring (10) is held adjustably on the spindle (4).

13. Transmission according to one of Claims 1 to 12, **characterized in that** the transmission (3) is designed as a planetary transmission.

14. Hand-held power tool with a transmission according to one of Claims 1 to 13.

## Revendications

1. Transmission débrayable pour une machine-outil manuelle, qui présente au moins deux rapports de vitesse, qui peuvent être passés par l'intermédiaire d'un organe de commutation réglable (11), dans laquelle dans un premier rapport de vitesse l'organe de commutation (11) se trouve dans une position de verrouillage avec un élément de blocage (7) retenu solidement sur le carter et dans un deuxième rapport de vitesse se trouve dans une position de verrouillage extérieure avec l'élément de blocage (7), et comportant une broche (4) pour recevoir un outil, qui peut être entraîné par une roue d'engrenage (6) appuyée dans le logement (5), sollicité par ressort axialement, dans laquelle la roue d'engrenage (6) est appuyée axialement sur le côté opposé à l'organe de commutation (11) sur l'élément de blocage (7), **caractérisée en ce que** l'élément de blocage est réalisé comme une bague de blocage (7).

2. Transmission selon la revendication 1, **caractérisée en ce que** la bague de blocage (7) présente sur le côté intérieur des éléments de complémentarité de forme (13), qui dans la position de verrouillage se trouvent en complémentarité de forme avec l'organe de commutation (11).

3. Transmission selon la revendication 1 ou 2, **caractérisé en ce que** la bague de blocage (7) présente sur le côté extérieur des éléments d'encliquetage (14) en saillie radialement, qui servent à encliqueter la bague de blocage (7) dans le carter (5).

4. Transmission selon une des revendications 1 à 3, **caractérisée en ce que** dans la position de verrouillage l'organe de commutation (11) est déplacé axialement dans la direction de la bague de blocage (7) jusqu'au point où la surface frontale du côté de la broche de la bague de blocage (7) se situe dans un plan commun avec la surface frontale de l'organe de commutation (11).

5. Transmission selon une des revendications 1 à 4, **caractérisée en ce que** la bague de blocage (7) présente un segment angulaire ouvert d'environ 25°.

6. Transmission selon la revendication 5, **caractérisée en ce que** sur les côtés frontaux libres de la bague de blocage (7), des oeillets de retenue (18) sont disposés.

7. Transmission selon la revendication 6, **caractérisée en ce que** la bague de blocage (7) présente une section transversale s'amincissant dans la direction des deux oeillets de retenue (18).

8. Transmission selon une des revendications 1 à 7, **caractérisée en ce que** l'organe de commutation est conçu comme une couronne de commutation (11).

9. Transmission selon une des revendications 1 à 8, **caractérisée en ce que** la roue d'engrenage est conçue comme une couronne d'engrenage (6).

10. Transmission selon une des revendications 1 à 9, **caractérisée en ce que** l'élément de ressort (8) presse au moins un corps d'obturation (9) contre un côté avant de la roue d'engrenage (6).

11. Transmission selon une des revendications 1 à 10, **caractérisé en ce que** le point de pied de l'élément de ressort (8) peut être réglé sur le côté qui se détourne de la roue d'engrenage (6) au moyen d'une bague de réglage (10).

12. Transmission selon la revendication 11, **caractérisée en ce que** la bague de réglage (10) est maintenue de manière réglable sur la broche (4).

13. Transmission selon une des revendications 1 à 12, **caractérisée en ce que** la transmission (3) est réalisée comme un engrenage planétaire.

14. Machine-outil manuelle comportant une transmission selon une des revendications 1 à 13.
